# EUROPEAN PATENT SPECIFICATION

(11) **EP 3 586 101 B1**
(45) Date of publication and mention of the grant of the patent: **01.05.2024**
(21) Application number: 18711688.4
(22) Date of filing: 21.02.2018
(51) Int. Cl.: G01N 1/30, G01N 33/53, C08J 3/09, C12Q 1/04

(54) **METHOD FOR THE PREPARATION OF BIOLOGICAL SAMPLES AND COMPOSITION FOR MOUNTING MICROSCOPE SLIDES**
VERFAHREN ZUR HERSTELLUNG BIOLOGISCHER PROBEN UND ZUSAMMENSETZUNG ZUM AUFBRINGEN VON OBJEKTTRÄGERPLÄTTCHEN
PROCEDE DE PRODUCTION D'ECHANTILLONS BIOLOGIQUES ET COMPOSITION D'APPLICATION DE PLAQUES PORTEUSES D'OBJETS

(30) Priority: 21.02.2017 IT 201700019088
(43) Date of publication of application: 01.01.2020
(73) Proprietor: Diapath S.p.A., 24057 Martinengo (BG) (IT)
(72) Inventor: LUPO, Carmelo, I-24057 Martinengo, BG (IT); MELONE, Federica, I-24057 Martinengo, BG (IT); BATTISTEL, Alberto, I-24057 Martinengo, BG (IT); BERGAMINI, Federica, I-24057 Martinengo, BG (IT); BERGAMINI, Vladimiro, I-24057 Martinengo, BG (IT)
(74) Representative: Trupiano, Federica
(86) International application number: PCT/IB2018/051061
(87) International publication number: WO 2018/154453

(56) References cited:
- WO-A1-02/12857
- WO-A1-2004/009145
- WO-A1-2011/031578
- GB-A- 1 201 777
- GB-A- 2 155 943
- JP-A- H01 108 242
- JP-A- 2005 352 422
- US-A1- 2007 166 197
- T. TIPPO ET AL: "The effects of solvents on the properties of ultra-thin poly (methyl methacrylate) films prepared by spin coating", THIN SOLID FILMS, vol. 546, 1 November 2013 (2013-11-01), pages 180-184, XP055474204, AMSTERDAM, NL ISSN: 0040-6090, DOI: 10.1016/j.tsf.2013.05.022

## Description

### SUMMARY OF THE INVENTION

Subject-matter of the present invention is a method for the preparation of biological, cytological, histological and autopsical samples and a composition for mounting microscope slides.

### BACKGROUND OF THE INVENTION

In the histo-cytopathological diagnosis, the microscopic observation of biological samples is for the formulation of the diagnosis.

The preparation of biological samples, i.e. tissues and cells, is a multi-stage process which makes use of automatic technologies and/or manual protocols for making the sample itself suitable for the microscope observation.

As it is known in the art, the samples undergo several procedures which provide fixation, diaphanization and staining, before being "mounted" on a microscope slide for the microscope analysis.

The "mounting" consist of covering the sample which is on the microscope slide with a coverslip, usually having thickness lower than one millimeter. The stable adhesion of the coverslip to the microscope slide is achieved by using a mounting medium having refractive index similar to that of the microscope slide.

The mounting media are viscous substances, usually soluble in organic solvents, which act as an adhesive and, once dried, assure a good conservation of the sample. Moreover, it is a fundamental requirement that all the materials used for the mounting are ultra-transparent, in order to allow the light coming from the light source to quantitatively reach the objective. The most common mounting medium is the Canada balsam (also commonly known as Canada turpentine).

The mounted microscope slide then undergoes the observation under the optical microscope, in order to formulate the diagnosis.

The mounting of the microscope slides is a kind of packaging of the histo-cytopathological sample and strongly affects its readability and time-resistance over time.

Object of the mounting is therefore to allow the sample to be analyzed to be within media with suitable refractive indexes, i.e. similar to those of the glass, in order to avoid possible distortions of the image during the microscope observation.

Another purpose of the mounting is to protect the sample and allow its conservation for long periods.

In the practical procedure of mounting the microscope slides, after the staining with water-soluble substances has been carried out (such as the typical hematoxylin and eosin stain), it is necessary to proceed with the sample dehydration by means of dippings into an increasing alcoholic scale of the microscope slide, with a last passage in xylene. Dehydration is necessary since the above mounting medium cannot be mixed with water or solutions thereof. After a proper dehydration an aliquot of the mounting medium is deposited on the microscope slide by means of a disposable pipette, watching any excess of the medium. Straight after, the thin coverslip is placed on the microscope slide.

This procedure can happen manually or automatically, by using automatic coverslippers.

A standard automatic coverslipper can sequentially apply the coverslips on the microscope slides bearing the sample section, by directly taking them from the basket used for the staining. At the end of the staining, the basket is placed in a tray of the automatic coverslipper, subsequently a clamp takes from the basket a microscope slide at a time and places it in horizontal position under the nozzle supplying the mounting medium.

After an aliquot of the mounting medium has been supplied, a suction cup places a coverslip on the microscope slide thus completing the preparation of the preparation. Some of these automatic coverslippers do not use coverslips, but rather a film released on the surface of the microscope slide after it has been properly soaked with xylene in order to allow proper adhesion.

The properly used mounting procedure of the sample briefly described above has however several drawbacks.

When a manual mounting procedure is employed, there will be the need of using the fume hood. As a matter of fact, it is used to limit the risk deriving from the use of toxic substances such as xylene, which is used for both the treatment of the sections and as diluent of the mounting medium.

Moreover there is the critical issue of the proper positioning of the coverslip on the microscope slide (both in case of manual and automatic mounting). It may happen that the coverslip slightly sticks out from the edges of the microscope slide, and in the cases of greater misalignment, the coverslip has to be remounted by the user. However, such operation becomes irreversible once the mounting medium becomes dry. If one would operate with the dried mounting medium, the mounted microscope slide should remain in the xylene in some cases for up to 3-4 days before being able to remove the misaligned coverslip, in order to then mount another one again. Moreover, microscopes have a metal clip hooked to the mobile tray, useful to keep the microscope slide fixed during the observation. During the positioning of the microscope slide under the lens, the metal clip vigorously hits the mounted microscope slide thus causing the break of small fragments from the edges of the microscope slide. The incorrect positioning of the coverslip on the microscope slide can significantly worsen the chipping of the microscope slide mounted on the microscope, since the created fragments accumulate on the microscope lamp (placed underneath the microscope slide) and in addition leave dangerous chipped edges of the mounted microscope slide. Moreover, the most frequent problem is the formation possibility of air bubbles between the coverslip and the sample. During the mounting procedure, the air bubbles form as a consequence of the user's manipulation, by the simple displacement of the container or by the collection of the mounting medium with the pipette (when an excess of the mounting medium has been deposited). All these operations cause the sliding of the coverslip on the microscope slide, causing small air bubbles to be included in the mounting medium. These remain trapped therein due to its high viscosity, thus causing problems to the proper microscope observation. The same problem can occur also with automatic mounting systems (coverslipper).

A further disadvantage refers to inaccurate and possible abundant delivery of the mounting medium. When this occurs, it will be needed to remove the excess mounting medium which leaks out from the mounted microscope slide, since it has strong adhesive power, thus clearly making difficult the manipulation by the user. The removal of the excess mounting medium is a delicate process, since possible smears of the fluid on the coverslip would compromise the microscope observation.

The "dismounting" of the preparation is another critical issue. As a matter of fact, in those cases where there is the need of recovering the biological sample from a microscope slide mounted since long time (with the aim of performing further tests), in order to be able to remove the coverslip, as mentioned, the mounted microscope slide must remain in a xylene bath for at least 3 days. As time passes, in fact, the mounting medium becomes less prone to be solubilized in xylene (*ad hoc* solvent for the solubilization and/or dilution of the most common mounting media). Moreover if the re-solubilization procedure of the mounting medium is not carried out properly, the removal of the coverslip causes the separation of the sample from the microscope slide or the removal of part of it, thus irremediably damaging the use of the sample itself for the further tests needed.

It is clear therefore that the mounting is highly time-consuming, being proportional to the number of microscope slides to be mounted and also due to the high accuracy requested for the application of the mounting medium and coverslip. The time requested for the complete drying of the mounted microscope slides should be added to this time. Therefore, in order to speed up the drying process, the mounted microscope slides are incubated within an oven at 60°C for about 30 minutes.

Concerning the automatic procedure, there are other disadvantages with respect to the manual procedure. Among these, there is the fine calibration of the instrument. Since the mounting procedure requires significant precision, the instrument needs a millimeter calibration in order to avoid macroscopic preparation errors. For example, an inaccurate calibration of the mechanism moving the clamp can lead the microscope slide to breakage; analogously, the off-center positioning of the coverslip forces the user to dismount and mount again the preparation. Moreover, all the components of the apparatus to draw the mounting medium must be perfectly firm in order to avoid the formation of air bubbles.

There are automatic coverslippers as well which use a film instead of the coverslip; such coverslippers require accurate calibration, in order to assure that the film is uniformly spread out and does not cause artifacts on the microscope slide.

Moreover, since it is a high precision instrument, it must be placed on a dedicated vibration-isolated table and, possibly, also on an anti-vibration floor. Moreover, it is advantageous to place the instrument under the hood in a perfectly horizontal position, and the cleaning operations are usually carried out with xylene.

In addition, the cleaning procedures of the instrument are required daily. At the end of the use of the automatic coverslipper, the residues of the mounting medium must be removed from the dispenser units, the clasp and the conveyor belt, as well as from the nozzle delivering the mounting medium. Such cleaning procedures are carried out with a rag soaked with xylene, which is toxic for the user, in particular if the instrument is not placed under a fume hood. Great care should also be given in order to avoid the penetration of liquids within the instrument and the electric contacts. In addition, if some solvent should remain within the instrument, solvent vapors could come out. With the use of the apparatus without a fume hood, there is the risk of firing and poisoning.

Since the breakage of small microscope slide fragments is frequent, due to small imperfections on the calibration of the whole system, the removal of the above mentioned fragments from the conveyor belt, the basket collecting the microscope slides, the loading basket, the vacuum cup and the internal compartment of the instrument is necessary. In addition, several maintenance procedures of the used instruments are clearly needed.

Finally, the microscope slides for the immunohistochemistry analysis have often a bar code label on the frosted end, still before the biological sample is positioned. Such label, necessary for the identification, can be a source of malfunction of the clasp of the automatic coverslipper, since glue residues coming from the label tend to accumulate on the clasps, thus making a xylene cleaning necessary.

In view of the above, it is clear that there is the need of finding systems for mounting the microscope slides which can solve the several disadvantages related to the conventional mounting process of the biological samples.

### OBJECTS OF THE INVENTION

It is an object of the present invention to provide a quick and effective method for mounting microscope slides for the analysis of biological, cytological, histological and autopsical samples.

It is another object of the present invention to provide a new composition particularly suitable to the method of the invention for mounting microscope slides of the invention, for the analysis of cytological, histological and autopsical samples.

It is also an object of the present invention to provide a composition which allows a mounted microscope slide without bubbles and imperfections to be obtained and which, at the same time, provides further advantages, such as a suitable protection of the microscope slide itself.

It is a further object of the present invention to provide the use of said composition for the preparation of biological, cytological, histological and autopsical samples for their microscope observation.

### DESCRIPTION OF THE INVENTION

The present invention relates to a method for mounting microscope slides for the analysis of biological, cytological, histological and autopsical samples, comprising:
(i) dipping said microscope slides into at least one fluid composition comprising:
   a) at least one liquid component selected from ethyl acetate, butyl acetate, 1-methyl-2-methoxyethyl acetate and isoparaffin-based solvents; and
   b) one or more polymers or copolymers selected from polymethyl methacrylate, polyethyl methacrylate, polybutyl methacrylate, polymethyl acrylate and polyethyl acrylate, in an amount of 15%-80% ([g of polymer (b)/100 ml of final composition]).

According to an embodiment, subj ect-matter of the invention is a method for mounting microscope slides for the analysis of biological, cytological, histological and autopsical samples, comprising:
(i) dipping said microscope slides into at least one fluid composition comprising:
   a) at least one liquid component selected from ethyl acetate, butyl acetate, 1-methyl-2-methoxyethyl acetate and isoparaffin-based solvents; and
   b) one or more polymers or copolymers selected from polymethyl methacrylate, polyethyl methacrylate, polybutyl methacrylate, polymethyl acrylate and polyethyl acrylate, in an amount of 15%-80% ([g of polymer (b)/100 ml of final composition]);
(ii) extracting said microscope slides from the composition;
(iii) letting them drip;
(iv) optionally repeating the steps from (i) to (iii); and
(v) letting them air-dry or drying them with a suitable means.

Steps from (i) to (iii) can be repeated two or more times; generally, two dippings are enough. When two or more dippings are carried out, the compositions can be identical or different from each other, concerning the components and concentrations.

According to an embodiment, two dippings are carried out in two identical compositions, preferably having a concentration of component (b) of about 20%.

According to an embodiment, two dippings are carried out in two different compositions, the first composition used having a concentration of component (b) of about 30% and the second of about 20%.

However other embodiments are possible and all of them are within the scope of the present invention.

In the method of the present invention, the dipping and the dripping require only few seconds/minutes, as it will be described in more detail in the present specification and examples.

The drying step (v) can be carried out with any suitable means known in the art, e.g. under a fume hood, in the oven, etc.

All the percentages expressed in the present invention, unless clearly stated, refer to the mass/volume percentage concentration ([g/100 ml]), i.e. to the weight of component (b) relative to 100 volume units of final composition. In practice, by way of example, according to the present invention a 20% composition indicates that in the composition there are 20 g of polymer (b) to which the liquid component (a) has been added in a suitable amount to reach a total volume of 100 ml.

According to an embodiment, said one or more polymers (b) are at 20-70%.

According to an embodiment, said one or more polymers (b) are at 20-50%.

According to an embodiment, said one or more polymers (b) are at 20-40%.

According to an embodiment, said one or more polymers (b) are at 30-70%.

According to an embodiment, said one or more polymers (b) are at 30-60%.

According to an embodiment, said one or more polymers (b) are at 30-40%.

According to an embodiment, said one or more polymers (b) are at 40-70%.

According to an embodiment, said one or more polymers (b) are at 40-60%.

According to an embodiment, said one or more polymers (b) are at 40-50%.

According to an embodiment, said one or more polymers (b) are at 50-70%.

According to an embodiment, said one or more polymers (b) are at 60-70%.

According to a preferred embodiment, said one or more polymers (b) are in an amount of 10-50%, still more preferably of 20-40% or 25-45%.

According to the present invention, "dipping(s)" or "to dip" (or derived verb conjugations) denote that the microscope slide is introduced, generally vertically, into the fluid composition in order to cover it.

In the present invention, "paraffin-based solvents" denote a liquid component comprising, among the other substances, mixtures of aliphatic hydrocarbons preferably having up to 13 carbon atoms, wherein said hydrocarbon mixtures are at amounts, in the liquid component, preferably higher than 40%, advantageously at least 50%, such as the products actually marketed by the Applicant under the trademarks Diasolv^{®} and Ottix Plus^{®}.

According to a preferred embodiment, the liquid component (a) is selected from ethyl acetate, butyl acetate, 1-methyl-2-methoxyethyl acetate and mixtures thereof. Subject-matter of the invention, according to another of the aspects thereof, is a composition for mounting a microscope slide for the analysis of biological, cytological, histological and autopsical samples, comprising:
a') a liquid component selected from ethyl acetate, butyl acetate, 1-methyl-2-methoxyethyl acetate and mixtures thereof; and
b') methyl methacrylate and butyl methacrylate copolymer, in an amount of 15%-80% ([g of polymer (b')/100 ml of final composition]).

Said composition is herein also defined as the "composition of the invention".

On the other hand the term "compositions described herein" refers to both the composition of the invention and the composition described above instead, together with the method of the invention.

According to a preferred embodiment, the liquid component (a') of the composition of the invention is selected from ethyl acetate, 1-methyl-2-methoxyethyl acetate and mixtures thereof.

According to a preferred embodiment, the copolymer (b') of the composition of the invention is selected from a methyl methacrylate and butyl methacrylate copolymer, e.g. from the products actually marketed under the trademarks Paraloid B-64^{®} and Elvacite 4021^{®}.

According to a preferred embodiment, in the composition of the invention said copolymers (b') is in an amount of 10-50%, still more preferably of 20-40% or 25-45%.

According to a preferred embodiment, the composition of the invention comprises also at least one stretching agent, such as for example the polyether-modified polymethylalkylsiloxane, preferably in an amount of 0.1-0.3%.

Subject-matter of the invention, according to another of the aspects thereof, is the method described above which uses the composition of the invention. Subject-matter of the invention is also the use of the composition of the invention for the preparation of microscope slides of biological, cytological, histological and autopsical samples (herein in the following defined only as biological samples as well). The compositions described herein can be essentially assimilated to a resin and are useful for mounting samples, usually biological, in optical microscopy.

In the present invention, "resin" denotes a liquid viscous material, which can harden under specific conditions, as it will be explained below.

In the preset invention "mounting" denotes, within the process for the preparation of an usually biological sample, e.g. histological or cytological but also of other kinds, the final step on a microscope slide usually carried out in order to perform microscope analysis, as it is well known by the one skilled in the art.

According to some embodiments, the compositions described herein can also comprise other components in addition to those mentioned above.

In fact, in an embodiment the compositions described herein further comprise one or more mounting media currently marketed under the trademarks Diamount^{®} (comprising isoparaffins), Micromount^{®} (comprising xylene and ethylbenzene), Eukitt^{®} (comprising xylene) and OpticMount^{®} (comprising toluene and acrylate polymers), at an amount from 5% to 30% v/v with respect to the total volume of the composition formed by (a) or (a') and (b) or (b').

The compositions described herein may comprise components which can improve the adhesion of the compositions to the microscope slide ("bond enhancer" compounds), such as one or more functionalized organosilane derivatives, preferably γ-methaacryloxypropyltrimethoxysilane; such components are preferably at 0.5%-10% and more preferably at 1%-5%.

In addition, the compositions described herein can comprise anti-scratch agents, such as polysiloxanes (i.e., silicones) and/or paraffin, preferably polydimethylsiloxane and/or a stretching agent such as a polyether-modified polymethylalkylsiloxane, such as the product actually marketed under the trademark BYK-320^{®}; such components are preferably in an amount of 0.01%-5% and more preferably of 0.1%-1%.

The compositions described herein can further comprise antioxidants, preferably functionalized phenols and/or aromatic amines, still more preferably butylhydroxytoluene (BHT); such components are preferably at 0.05-2% and more preferably at 0.1%-1%.

The compositions described herein can comprise as well some components able to protect the composition itself from UV light ("UV absorbers"), preferably functionalized benzophenones and/or benzotriazoles, such as for example 2-hydroxybenzophenone, 4-hydroxybenzophenone and 2-hydroxyphenyl benzotriazole. Such components are preferably at 0.01%-2% and more preferably at 0.1%-1%.

The compositions described herein can moreover comprise plasticizers, preferably at least one plasticizer selected from the family of phthalates, adipates and benzoates; preferably at 0.05%-5%, preferably at 0.1%-3%.

The one skilled in the art can perfectly understand the utility of each of the above mentioned components within the composition.

The process for the preparation of the compositions described herein does not require critical conditions or procedures. As a matter of fact, the process can completely occur at room temperature and can be carried out in a container, preferably opaque or amber, equipped with a cap or another kind of closure in order to avoid the evaporation of the liquid component. To this container the liquid component is added and then, under mechanical or magnetic stirring, the other elements composing the compositions described herein or one of the preferred embodiments thereof are added. Finally, it is left under stirring until obtaining a clear homogeneous mixture. Practical examples of the process for the preparation of some illustrative embodiments are provided in the experimental section.

The compositions described herein, as it will be extensively explained in the following, can effectively protect the biological sample and do not generate distortions under the microscope, since they are ultra-transparent and in addition reproduce all the functional characteristics of a coverslip. Moreover, compositions described herein are characterized by high adhesion to the microscope slide, resistance to mechanical stresses and high stability over time. In addition, by their nature, the compositions described herein do not interfere with the material, without producing alterations or artifacts in the structure or staining of the sample.

The peculiar combination of the polymers composing the compositions described herein confers flexibility and rigidity at the same time to the material. It is clear that a certain level of flexibility is needed to create a flattened and homogeneous layer on the whole area of the microscope slide, which uniformly covers the microscope slide for about 3-6 microns, without the risk of breaks at the edges of the section after the composition is completely dried. At the same time, it is necessary that the compositions described herein are provided with such rigidity in order to create a protective barrier, e.g. they are resistant to mechanical stresses, thus effectively protecting the sample.

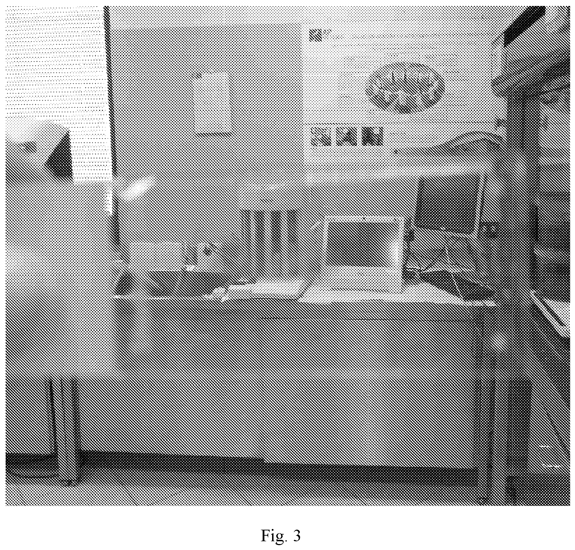

Moreover, the compositions described herein have refractive index very close to that of the microscope slide (1.48-1.50), thereby appearing ultra-transparent to the naked eye (as represented in Figure 3).

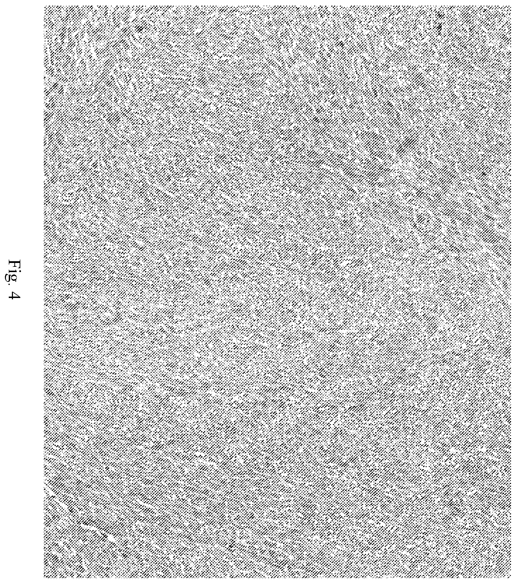

The compositions described herein, preferably the compositions according to the invention, are particularly suitable for the mounting of microscope slides for the microscope observation, since they do not create aberrations, distortions and color alterations of the biological sample; in fact, it is possible to note from Figure 4, depicting the microscope image of a biological sample mounted with the compositions described herein, that the sample appears ultra-transparent, perfectly suitable for the observation, and has not any distortions or aberrations.

It is possible to precisely modulate the viscosity of the compositions described herein in order to avoid the incorporation of air bubbles and, at the same time, to promote both the adhesion of a layer of suitable thickness on the microscope slide and the auto-flattening of the composition following its application. The modulation of the viscosity can be obtained by modifying the proportions between polymers and liquid component; as it is clear to one skilled in the art, by increasing the amount of the liquid component within the compositions described herein the viscosity will decrease, and vice versa.

Moreover, the complete immiscibility of the compositions described herein with water makes them a material that cannot be altered by the air moisture. On the other hand, it results to be soluble in xylene, toluene and limonene-based solvents and isoparaffin-based solvents.

In those cases where it is necessary to dismount the mounted microscope slide, e.g. for further analysis of the histo-cytological material, the compositions described herein can be removed from the microscope slide by simple dipping into one of the above mentioned solvents, in addition to solvents or solvent mixtures being in the compositions and able to solubilize the composition. The operation of composition re-solubilization and sample dismounting requires little time, i.e. few minutes (5-7-minutes), significantly shorter than the same procedure providing the use of conventionally mounted microscope slides, i.e. by means of mounting medium and coverslip, which requires several days.

It is clear therefore that the application of the compositions described herein on the surface of the microscope slide leads to several advantages with respect to the conventional mounting process. In fact, as mentioned, such application creates a uniform, flattened, ultra-transparent, air bubbles-free film and does not require the application of the coverslip, as in the known and conventional art, and allows a quick dismount and has suitable rigidity and flexibility features.

The fact that the application of a coverslip is not required is an important result provided by the present invention.

In some sporadic cases, e.g. at 40x magnification or higher, it is possible that the observation of the sample to be analyzed is sub-optimal. It has been however experienced that it is possible to correct a possible imperfect focus by simply applying on the objective a coverslip (of very small circumference, proportional to that of the objective lens) by means of a water-based adhesive mixture which does not damage the objective lens itself and can be easily removed. Therefore, in the case wherein the mounted sample according to the invention would not be perfectly analyzable, it is sufficient to lean a microscope slide, as a contact lens, on the objective lens. For the application a drop of a water-based adhesive mixture can be used, e.g. a mixture comprising and, preferably, consisting of:
- PVP (polyvinylpyrrolidone) at a concentration from 2 to 20%;
- PEG400 at a concentration from 5 to 40%; and
- water q.s. up to 100 ml.

The mixture has adhesive properties, is completely safe, has high refractive index (about 1.50) and, in case it has to be removed, it is enough to use water.

A further advantage of the method of the invention and compositions described herein is represented by the conditions which allow the curing of the compositions described herein (which are analogous to a resin) following the application of the compositions themselves on one or more microscope slides. These conditions in fact do not require UV irradiation, but the simple exposure to air or a temperature of about 50°C, in the last case saving time with respect to the air-exposure alone.

The curing conditions of the compositions described herein thus lead to a significant advantage in relation to the stability limits of the biological samples, which cannot tolerate in an acceptable way prolonged thermal stresses or continuous UV radiation. Due to these stresses, there is the real possibility that various features of the sample are altered, e.g. due to the interference with the DNA, biological structures on the whole and stains, thus creating alterations or artifacts in the sample structure.

On the other hand, the polymerization process by UV requires a well-defined orientation of the microscope slide relative to the UV source and a sub-optimal orientation would prolong irradiation times thus damaging the biological sample. On the other hand if the usual automatic stainers are used, where the microscope slides are placed into the basket, in order to achieve an optimal orientation of the microscope slides relative to the UV source, the user would be forced to intervene in order to move them out from the basked and place them onto a suitable surface, an operation requiring time and canceling out the advantages of the automatic processing.

Differently, the present invention allows the user to directly mount the microscope slides into the basket used for the staining, with a single simple procedure and without the need of removing/readjusting the microscope slides.

Another advantage provided by the compositions described herein is that the time required to cure said compositions is short but in any case leaves to the user, or to the automatic instrument, enough time to conveniently manipulate the microscope slide to be mounted.

In fact, the curing time of the compositions described herein is the ideal time to allow the user, or the automatic instrument, to suitably handle the microscope slide to be mounted, thus allowing at the same time a quick and fast mounting operation and reducing significantly the preparation times of the biological samples and thereby optimizing the workflow.

The compositions described herein can be suitably applied on the microscope slide to be mounted thanks to a simple and quick dipping of one or more microscope slides, usually in vertical position, into said compositions. According to the desired thickness of the resin, it is possible to perform several dippings. It is therefore clear that the viscosity of the composition as well affects the thickness of the resin which is applied on the microscope slide during the dippings.

By way of example, it is possible to perform a double dipping which provides the introduction of the microscope slide into two stations containing the composition of the invention at 20%. According to an embodiment, a dipping of about 1.5 minutes into the first resin at 20%, a dripping of about 1 minute, a second dipping into 20% resin of about 1.5 minutes and finally a dripping for about 1 minute and air- or oven-drying can all be provided.

Alternatively, it is possible to perform a double dipping of the microscope slide in two stations containing two resins at different concentrations; e.g. a first dipping into 30% resin for about 1.5 minutes, a dripping of about 1 minute, and a second dipping into the 20% resin for 10 seconds, followed by a dripping for about 1 minute.

Other possible solutions, in terms of dipping and/or dripping and/or qualitative-quantitative compositions of the compositions, are clearly within the skills of the expert in the field.

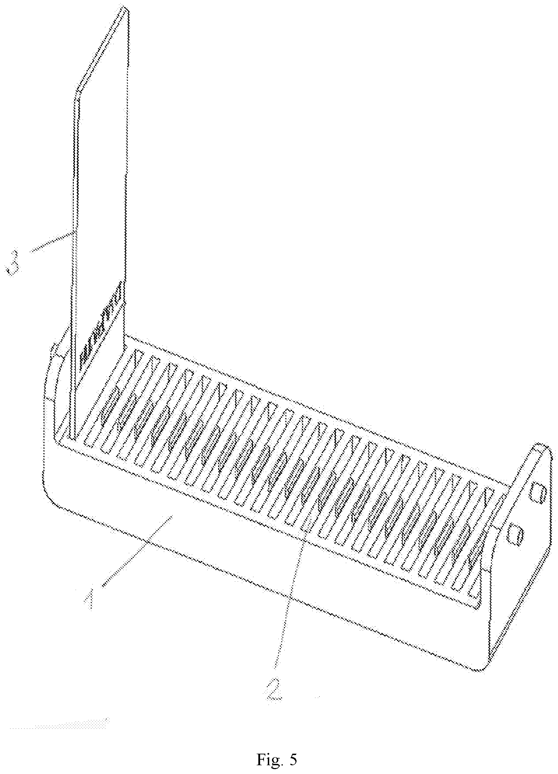

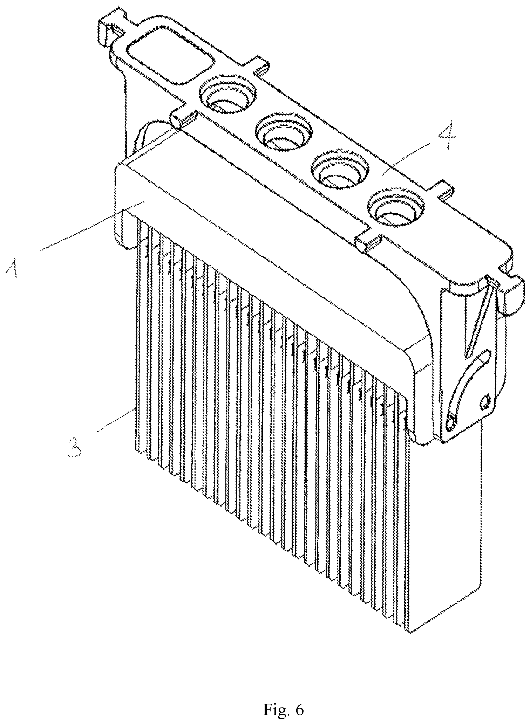

For the dipping of the compositions described herein, the microscope slides can be advantageously housed in a basket as the one described in Figures 5 and 6.

Figures 5 and 6 particularly show of a basket suitable for the placement of the microscope slides that have to be dipped into the compositions described herein, to implement the method of the invention. In particular, Figure 5 shows the basket with a single microscope slide and Figure 6 shows the basket housing all the microscope slides, ready for the dipping according to the method of the invention.

With reference to Figures 5 and 6, said basket is made of a body (1) characterized by slits (2) where it is possible to insert the microscope slides (3) by means of mild pressure. To this body a handle (4) is attached, which allows the picking up and transporting procedures by means of the mobile arm of the automatic stainer. It is important that the microscope slides are housed in the basket by means of (into the section of) the frosted band of the microscope slide itself. The remaining surface of the microscope slide will remain free in order to allow the compositions described herein to cover the microscope slide and then to flow by gravity homogeneously in the step immediately following the dipping, i.e. in the "dripping" step.

It is clear that the method according to the invention leads to all the above described advantages and still many others.

Among these additional advantages, there is a further and significant time-saving. In fact, as it will be shown in the Experimental Section of the present description, the dipping step into the compositions described herein may involve more microscope slides at the same time, i.e. it can be carried out in parallel on a variable number of microscope slides, e.g. up to 30 if a standard basket is used as a support. This leads to a clear time-saving with respect to the conventional mounting process, which provides the mounting medium and the coverslip to be arranged one sample at a time, i.e. serially.

The compositions described herein within the basket containing the microscope slides to be mounted/already mounted can be easily removed with a quick washing of the basket with a suitable solvent, e.g. xylene or surrogates thereof, or with ethyl acetate. Moreover, the compositions herein described of the invention allow the user to directly mount the microscope slides into the basket which is usually used for the staining, with a single and simple action (the dipping of the basket) and without the need of removing and repositioning the microscope slides, with a further time-saving. By way of example, in the experimental section a manual process for the mounting of the sample, which comprises the use of the compositions described herein and a basket usually used for the staining, will be described.

In addition to common procedures for the manual mounting, the compositions described herein can be easily used in conventional automatic stainers as well, which are normally used in the preparation of biological samples and known for sure to the one skilled in the art. This is very advantageous, since the automatic stainer has not all the critical issues discussed above, which are possessed by the automatic coverslipper, such as for example precise and fine calibration of the instrument, and moreover this will allow a precise mounting process to be provided without the use of any user.

By way of illustration, an automatic stainer is an instrument comprising various tanks containing fluids, generally staining solutions, and a mechanical arm. The mechanical arm can autonomously lift up, position and dip the basket containing the microscope slides to be stained into the various tanks. It is possible to program the mechanical arm in order to define the dipping sequence in the various tanks, as well as the dipping time in each tank.

This application of the compositions described herein offers the umpteenth time-saving with respect to the conventional mounting processes and, by way of example, in the experimental section a mounting process comprising an automatic stainer and the compositions described herein will be described.

Moreover and contrary to known compositions and resins for mounting microscope slides, the compositions described herein, in particular the composition of the invention, are particularly suited for the realization of the method of the invention, having the features required to that aim. In fact, with the known compositions and resins, it could not be possible to carry out the mounting of the microscope slides by means of the dipping technique of the microscope slide into the composition, due to the viscosity of said known compositions and resins which are not suited to such technique.

It will be clear that the time-saving of the mounting process, due to the compositions described herein, is significant. In fact the conventional mounting process, either manual or automatic, requires a time proportional to the number of the microscope slides. A comparative example of the conventional mounting process will be provided in the experimental section.

The compositions described herein allow therefore to get rid of a series of precision steps aimed at preparing one sample at a time, by replacing it with a single procedure which can be carried out for several microscope slides at a time, without inaccuracy and highly reproducible.

The use according to the invention provides all the advantages described above for the preparation of samples for the microscope analysis, specifically for the mounting step of the sample preparation, among which for example a significant time-saving and more precise and reproducible processing of biological samples.

### BRIEF DESCRIPTION OF THE DRAWINGS

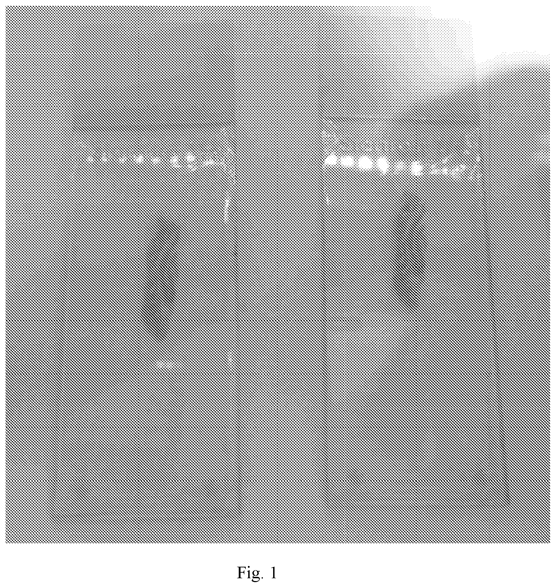

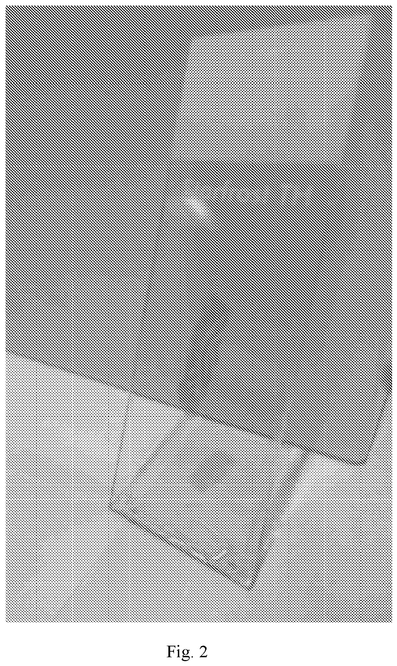

Figures 1 and 2 depict the compositions described herein after drying, at the end of the mounting process.
Figure 3 shows the ultra-transparency of the compositions described herein.
Figure 4 shows a microscope image representing a biological sample mounted with the compositions described herein.
Figures 5 and 6 show the basket useful in the method of the invention.

### EXPERIMENTAL SECTION

### Example 1

### Process for the preparation of an embodiment of a composition for the method according to the invention

An opaque container is filled with 800 ml butyl acetate. 1.05 g n-octadecyl-3-(3',5'-dit-butyl-4'-hydroxyphenyl)propionate (antioxidant agent) are added and left under stirring until complete dissolution, i.e. about 2 minutes. At this point, 200 g polymethyl methacrylate are added and left under stirring for about 2 hours at room temperature until obtaining a clear homogeneous mixture. Then 10.45 g/ml γ-methaacryloxypropyltrimethoxysilane ("bond enhancer") and 10 g 2-ethylhexyl adipate are added (plasticizer).

The process is completely carried out at room temperature, the mechanical stirring is stopped only after obtaining a clear homogeneous mixture (about 20 minutes). The final formulation thus appears viscous and particle-free.

### Example 2

### Process for the preparation of an embodiment of a composition for the method according to the invention

For the production of 1 liter of solution, an opaque container is filled with 700 ml xylene. 1.7 g butylhydroxytoluene (BHT) (antioxidant agent) are added and left under stirring until obtaining a clear homogeneous mixture, i.e. about 2 minutes. At this point, 300 g polymethyl methacrylate are added and left under stirring for about 2 hours at room temperature until obtaining a clear homogeneous mixture. Then, still at room temperature, 2 g liquid paraffin (anti-scratch agent) and 2.1 g 2-(5-tert-butyl-hydroxyphenyl)benzotriazole ("UV absorber") are added. After about 30 minutes under stirring, a clear homogeneous mixture is obtained. The final formulation thus appears viscous and particle-free.

### Example 3

### Process for the preparation of an embodiment of a composition for the method according to the invention

For the production of 1 liter of solution, an opaque container is filled with 600 ml xylene. 2 g n-octadecyl-3-(3',5'-di-t-butyl-4'-hydroxyphenyl)propionate (antioxidant agent) are added and left under stirring until obtaining a clear homogeneous mixture, i.e. about 2 minutes. At this point, 400 g polybutyl methacrylate are added and left under stirring for about 2 hours at room temperature until obtaining a clear homogeneous mixture. Then, still at room temperature, 15 g dibutyl phthalate (plasticizer) are added. After about 30 minutes under stirring a clear homogeneous mixture is obtained, which appears viscous and particle-free.

### Example 4

### Process for the preparation of an embodiment of a composition for the method according to the invention

An opaque container is filled with 1000 ml xylene and 250 ml Diamount^{®}. 400 g polybutyl methacrylate are added and left under stirring for about 2 hours at room temperature until obtaining a clear, homogeneous, viscous and particle-free mixture.

### Example 5

### Process for the preparation of an embodiment of a composition for the method according to the invention

An opaque container is filled with 800 ml xylene and 240 ml Micromount^{®}. 250 g polyethyl methacrylate are added and left under stirring for about 2 hours at room temperature until obtaining a clear, homogeneous, viscous and particle-free mixture.

### Example 6

### Process for the preparation of an embodiment of a composition for the method according to the invention

An opaque container is filled with 800 ml xylene and 100 ml OpticMount^{®}. 200 g polyethyl acrylate are added and left under stirring for about 2 hours at room temperature until obtaining a clear, homogeneous, viscous and particle-free mixture.

### Example 7

### Process for the preparation of an embodiment of a composition of the invention

An opaque container is filled with 400 ml ethyl acetate and 400 ml 1-methyl-2-methoxyethyl acetate. 200 g Paraloid B-64^{®} and 1 g BYK-320^{®} (polyether-modified polymethylalkylsiloxane) are added and left under stirring for about 2 hours at room temperature until obtaining a clear, homogeneous, viscous and particle-free mixture.

### Example 8

### Process for the preparation of an embodiment of a composition of the invention

An opaque container is filled with 350 ml ethyl acetate and 350 ml 1-methyl-2-methoxyethyl acetate. 300 g Elvacite 4021^{®} (methyl methacrylate/n-butyl methacrylate copolymer) and 1.5 g BYK-320^{®} (polyether-modified polymethylalkylsiloxane) are added and left under stirring for about 2 hours at room temperature until obtaining a clear, homogeneous, viscous and particle-free mixture.

### Example 9

### Mounting process

### Example 9.1 (Comparative)

### Conventional manual mounting process

At the end of the common process of manual staining, ending with alcohol washing, each of the 30 microscope slides underwent the following steps: (I) placing the microscope slide horizontally on the worktop; (II) delivering the proper amount of mounting medium on the microscope slide (about 2 drops); (III) placing the coverslip; and (IV) adjusting the coverslip. Overall time required to mount each microscope slide: about 12 seconds; multiplied for each microscope slide: about 360 seconds (i.e., about 6 minutes).

To the overall time spent for the conventional mounting of all the microscope slides, it should be added the drying time of the mounting medium, which takes about 20 minutes to be dried acceptably, for a total mounting time of about 26 minutes and 30 seconds.

Contrary to what has been described above, with the process according to the invention and considering two dippings, it is possible to save time, as it will be clear from the following examples.

Moreover, as it is clear from the just described example, the four steps reported above required for the conventional mounting, in addition to take a significant amount of time, are absolutely not free from errors or inaccuracy, these being particularly significant features. For this reason, the overall time of the procedure described above is further increased when: (1) the mounting medium is added in excess on the microscope slide and it would be required to remove such an excess; and (2) the mounting medium leaks from the microscope slide and it would be required to wait for the full and complete drying of the same for practical management of the workflow. Finally, it is required to wait at least one day after the mounting process for the effective storage of the so-mounted microscope slides, since it is required to wait until they are complete dried.

### Example 9.2

### Manual mounting process by using the method of the invention

Following the common method of manual staining, ending with the xylene washing (or similar solvents), a basket containing 25 microscope slides is manually dipped into a tank containing the composition according to example 7 for about 1.5 minutes, after which the excess of the composition is removed by dripping for 1 minute and a second dipping into the same composition is carried out for about 1.5 minutes, followed by dripping for about 1 minute. Finally the mounted microscope slides are dried at 50°C for 15 minutes, for an overall working-time of 20 minutes.

Alternatively, the 25 mounted microscope slides can be placed in an oven at 65°C for about 5 minutes, thus providing a mounting process having an overall time of about 10 minutes.

Microscope slides mounted in this way are shown in Figures 5 and 6.

### Example 9.3

### Automatic mounting process by using the method of the invention

Following the common staining process by means of an automatic stainer, ending with a xylene washing, 25 microscope slides (just stained) are taken by the automatic arm and dipped for 1.5 minutes into a tank still of the automatic stainer, containing the composition of the example 8. Then, the automatic arm of the automatic stainer transfers the microscope slides into an empty tank, in order to remove the excess of the composition for 1 minute and then they are dipped into a tank containing the composition of the example 7 for 10 seconds and then transferred into an empty tank, in order to remove the excess of the composition for 1 minute and to be completely air-dried, otherwise they are placed in an oven for a shorter drying.

The so-simplified mounting process of the microscope slides starts immediately after the staining and is completed within few minutes, without involving in any way the user.

It is clear that the mounting processes contemplating the use of the compositions described herein, i.e. Examples 9.2 and 9.3, provide an important time-saving with respect to the time needed for the conventional mounting, as described in Example 9.1, thus reducing the overall time for the preparation of the biological samples and optimizing the workflow and also getting rid of the problems related to air bubbles, flattening and possible inaccuracy due to the work by the user.

## Claims

1. A method for mounting microscope slides for the analysis of biological, cytological, histological and autopsical samples, comprising:
(i) dipping said microscope slides into at least one fluid composition comprising:
a) at least one liquid component selected from ethyl acetate, butyl acetate, 1-methyl-2-methoxyethyl acetate and isoparaffin-based solvents; and
b) one or more polymers or copolymers selected from polymethyl methacrylate, polyethyl methacrylate, polybutyl methacrylate, polymethyl acrylate and polyethyl acrylate, in an amount of 15%-80%.

2. The method according to claim 1, for mounting microscope slides for the analysis of biological, cytological, histological and autopsical samples, comprising:
(i) dipping said microscope slides into at least one fluid composition comprising:
a) at least one liquid component selected from xylene, ethyl acetate, butyl acetate, 1-methyl-2-methoxyethyl acetate and isoparaffin-based solvents; and
b) one or more polymers or copolymers selected from polymethyl methacrylate, polyethyl methacrylate, polybutyl methacrylate, polymethyl acrylate and polyethyl acrylate, in an amount of 15%-80%;
(ii) extracting said microscope slides from said composition;
(iii) letting them drip;
(iv) optionally repeating the steps from (i) to (iii); and
(v) letting them air-dry or drying them with a suitable means.

3. The method according to claim 1 or 2, **characterized in that** said one or more polymers (b) are present in an amount of 10-50%.

4. The method according to any one of claims 1 to 3, **characterized in that** said at least one of said one or more polymers (b) is a methyl methacrylate/butyl methacrylate copolymer.

5. The method according to any one of claims 1 to 4, **characterized in that** said at least one liquid component (a) is selected from ethyl acetate, butyl acetate, 1-methyl-2-methoxyethyl acetate and mixtures thereof.

6. A composition for mounting a microscope slide for the analysis of biological, cytological, histological and autopsical samples, comprising:
a') a liquid component selected from ethyl acetate, butyl acetate, 1-methyl-2-methoxyethyl acetate and mixtures thereof; and
b') methyl methacrylate/butyl methacrylate copolymer, in an amount of 15%-80%;
c') optionally a plasticizer, at a concentration of 0.05%-5%, preferably at 0.1%-3% by weight with respect to the total weight of the composition.

7. The composition according to claim 6, **characterized in that** said methyl methacrylate/butyl methacrylate copolymer (b') is present in an amount of 20-40%.

8. The composition according to claim 6, **characterized in that** said methyl methacrylate/butyl methacrylate copolymer (b') is present in an amount of 25-45%.

9. Use of a composition according to any one of claims 6 to 8, for mounting a microscope slide for the analysis of biological, cytological, histological and autopsical samples according to the method of any one of claims 1 to 5 and 10 to 14.

10. The method according to any one of claims 1 to 5, **characterized in that** it comprises the use of any one of claims 6 to 8.

11. The method according to any one of claims 1 to 5 and 10, **characterized in that** at least two steps (i) are carried out.

12. The method according to claim 11, **characterized in that** the compositions used in steps (i) have the same concentration.

13. The method according to claim 12, **characterized in that** two steps (i) are carried out and **in that** said compositions have a concentration of about 20%.

14. The method according to claim 11, **characterized in that** the compositions used in steps (i) have different concentrations, in particular that the first composition used has a concentration of about 30% and the second of about 20%.

## Patentansprüche

1. Verfahren zum Montieren von Objektträgern für die Analyse biologischer, zytologischer, histologischer und autopischer Proben, umfassend:
(i) Eintauchen der Objektträger in mindestens eine flüssige Zusammensetzung, umfassend:
a) mindestens eine flüssige Komponente, ausgewählt aus Ethylacetat, Butylacetat, 1-Methyl-2-methoxyethylacetat und Lösungsmitteln auf Isoparaffinbasis; und
b) einem oder mehreren Polymeren oder Copolymeren, ausgewählt aus Polymethylmethacrylat, Polyethylmethacrylat, Polybutylmethacrylat, Polymethylacrylat und Polyethylacrylat, in einer Menge von 15 bis 80 %.

2. Verfahren nach Anspruch 1 zum Montieren von Objektträgern für die Analyse biologischer, zytologischer, histologischer und autoptischer Proben, umfassend:
(i) Eintauchen der Objektträger in mindestens eine flüssige Zusammensetzung, umfassend:
a) mindestens eine flüssige Komponente, ausgewählt aus Xylol, Ethylacetat, Butylacetat, 1-Methyl-2-methoxyethylacetat und Lösungsmitteln auf Isoparaffinbasis; und
b) einem oder mehreren Polymeren oder Copolymeren, ausgewählt aus Polymethylmethacrylat, Polyethylmethacrylat, Polybutylmethacrylat, Polymethylacrylat und Polyethylacrylat, in einer Menge von 15 bis 80 %;
(ii) Extrahieren der Objektträger aus der Zusammensetzung;
(iii) sie tropfen lassen;
(iv) optionales Wiederholen der Schritte von (i) bis (iii); und
(v) sie lufttrocknen lassen oder sie mit geeigneten Mitteln trocknen.

3. Verfahren nach Anspruch 1 oder 2, **dadurch gekennzeichnet, dass** das eine oder die mehreren Polymere (b) in einer Menge von 10 bis 50 % vorhanden sind.

4. Verfahren nach einem der Ansprüche 1 bis 3, **dadurch gekennzeichnet, dass** das mindestens eine des einen oder der mehreren Polymere (b) ein Methylmethacrylat/Butylmethacrylat-Copolymer ist.

5. Verfahren nach einem der Ansprüche 1 bis 4, **dadurch gekennzeichnet, dass** die mindestens eine flüssige Komponente (a) aus Ethylacetat, Butylacetat, 1-Methyl-2-methoxyethylacetat und Mischungen davon ausgewählt ist.

6. Zusammensetzung zum Montieren eines Objektträgers für die Analyse biologischer, zytologischer, histologischer und autoptischer Proben, umfassend:
a') eine flüssige Komponente, ausgewählt aus Ethylacetat, Butylacetat, 1-Methyl-2-methoxyethylacetat und Mischungen davon; und
b') Methylmethacrylat/Butylmethacrylat-Copolymer, in einer Menge von 15 bis 80 %;
c') optional einem Weichmacher, in einer Konzentration von 0,05 bis 5 %, vorzugsweise in einer Konzentration von 0,1 bis 3 Gew.-% bezogen auf das Gesamtgewicht der Zusammensetzung.

7. Zusammensetzung nach Anspruch 6, **dadurch gekennzeichnet, dass** das Methylmethacrylat/Butylmethacrylat-Copolymer (b') in einer Menge von 20 bis 40 % vorhanden ist.

8. Zusammensetzung nach Anspruch 6, **dadurch gekennzeichnet, dass** das Methylmethacrylat/Butylmethacrylat-Copolymer (b') in einer Menge von 25 bis 45 % vorhanden ist.

9. Verwendung einer Zusammensetzung nach einem der Ansprüche 6 bis 8 zum Montieren eines Objektträgers für die Analyse biologischer, zytologischer, histologischer und autoptischer Proben gemäß dem Verfahren nach einem der Ansprüche 1 bis 5 und 10 bis 14.

10. Verfahren nach einem der Ansprüche 1 bis 5, **dadurch gekennzeichnet, dass** es die Verwendung nach einem der Ansprüche 6 bis 8 umfasst.

11. Verfahren nach einem der Ansprüche 1 bis 5 und 10, **dadurch gekennzeichnet, dass** mindestens zwei Schritte (i) durchgeführt werden.

12. Verfahren nach Anspruch 11, **dadurch gekennzeichnet, dass** die in Schritt (i) verwendeten Zusammensetzungen die gleiche Konzentration aufweisen.

13. Verfahren nach Anspruch 12, **dadurch gekennzeichnet, dass** zwei Schritte (i) durchgeführt werden und dass die Zusammensetzungen eine Konzentration von etwa 20 % aufweisen.

14. Verfahren nach Anspruch 11, **dadurch gekennzeichnet, dass** die in Schritt (i) verwendeten Zusammensetzungen unterschiedliche Konzentrationen aufweisen, insbesondere dass die erste verwendete Zusammensetzung eine Konzentration von etwa 30 % und die zweite von etwa 20 % aufweist.

## Revendications

1. Procédé de montage de lames de microscope pour l'analyse d'échantillons biologiques, cytologiques, histologiques et autopsiques, comprenant l'étape consistant à :
(i) tremper lesdites lames de microscope dans au moins une composition fluide comprenant :
a) au moins un composant liquide choisi parmi l'acétate d'éthyle, l'acétate de butyle, l'acétate de 1-méthyl-2-méthoxyéthyle et les solvants à base d'isoparaffine ; et
b) un ou plusieurs polymères ou copolymères choisis parmi le méthacrylate de polyméthyle, le méthacrylate de polyéthyle, le méthacrylate de polybutyle, l'acrylate de polyméthyle et l'acrylate de polyéthyle, en une quantité de 15 % à 80 %.

2. Procédé selon la revendication 1, pour le montage de lames de microscope pour l'analyse d'échantillons biologiques, cytologiques, histologiques et autopsiques, comprenant l'étape consistant à :
(i) tremper lesdites lames de microscope dans au moins une composition fluide comprenant :
a) au moins un composant liquide choisi parmi le xylène, l'acétate d'éthyle, l'acétate de butyle, l'acétate de 1-méthyl-2-méthoxyéthyle et les solvants à base d'isoparaffine ; et
b) un ou plusieurs polymères ou copolymères choisis parmi le méthacrylate de polyméthyle, le méthacrylate de polyéthyle, le méthacrylate de polybutyle, l'acrylate de polyméthyle et l'acrylate de polyéthyle, en une quantité de 15 % à 80 % ;
(ii) extraire lesdites lames de microscope de ladite composition ;
(iii) les laisser s'égoutter ;
(iv) répéter éventuellement les étapes de i) à iii) ; et
(v) les laisser sécher à l'air ou les sécher à l'aide d'un moyen approprié.

3. Procédé selon la revendication 1 ou 2, **caractérisé en ce que** ledit ou lesdits polymères (b) sont présents en une quantité de 10 % à 50 %

4. Procédé selon l'une quelconque des revendications 1 à 3, **caractérisé en ce que** ledit au moins un dudit ou desdits polymères (b) est un copolymère méthacrylate de méthyle/méthacrylate de butyle.

5. Procédé selon l'une quelconque des revendications 1 à 4, **caractérisé en ce que** ledit au moins un composant liquide (a) est choisi parmi l'acétate d'éthyle, l'acétate de butyle, l'acétate de 1-méthyl-2-méthoxyéthyle et leurs mélanges.

6. Composition pour le montage d'une lame de microscope pour l'analyse d'échantillons biologiques, cytologiques, histologiques et autopsiques, comprenant :
a') un composant liquide choisi parmi l'acétate d'éthyle, l'acétate de butyle, l'acétate de 1-méthyl-2-méthoxyéthyle et leurs mélanges ; et
b') un copolymère méthacrylate de méthyle/méthacrylate de butyle, en une quantité de 15 % à 80 % ;
c') éventuellement un plastifiant, à une concentration de 0,05 % à 5 %, de préférence de 0,1 % à 3 % en poids par rapport au poids total de la composition.

7. Composition selon la revendication 6, **caractérisée en ce que** ledit copolymère méthacrylate de méthyle/méthacrylate de butyle (b') est présent en une quantité de 20 % à 40%.

8. Composition selon la revendication 6, **caractérisée en ce que** ledit copolymère méthacrylate de méthyle/méthacrylate de butyle (b') est présent en une quantité de 25 % à 45 %.

9. Utilisation d'une composition selon l'une quelconque des revendications 6 à 8, pour le montage d'une lame de microscope pour l'analyse d'échantillons biologiques, cytologiques, histologiques et autopsiques selon le procédé de l'une quelconque des revendications 1 à 5 et 10 à 14.

10. Procédé selon l'une quelconque des revendications 1 à 5, **caractérisé en ce qu'**il comprend l'utilisation de l'une quelconque des revendications 6 à 8.

11. Procédé selon l'une quelconque des revendications 1 à 5 et 10, **caractérisé en ce qu'**au moins deux étapes (i) sont mises en oeuvre.

12. Procédé selon la revendication 11, **caractérisé en ce que** les compositions utilisées dans les étapes (i) ont la même concentration.

13. Procédé selon la revendication 12, **caractérisé en ce que** deux étapes (i) sont réalisées et **en ce que** lesdites compositions ont une concentration d'environ 20 %.

14. Procédé selon la revendication 11, **caractérisé en ce que** les compositions utilisées dans les étapes (i) ont des concentrations différentes, notamment **en ce que** la première composition utilisée a une concentration d'environ 30 % et la seconde d'environ 20 %.
